# EUROPEAN PATENT APPLICATION

(11) **EP 3 410 295 A1**
(43) Date of publication of application: **05.12.2018**
(21) Application number: 17174127.5
(22) Date of filing: 02.06.2017
(51) Int. Cl.: G06F 9/44

(54) **VERSION MANAGEMENT OF GRAPHICAL PROGRAMS IN A COLLABORATIVE ENGINEERING ENVIRONMENT**

(71) Applicant: Siemens Aktiengesellschaft, 80333 München (DE)
(72) Inventor: Sneha, Joseph, 560047 Bangalore (IN); Aswathy, R., 560100 Bangalore (IN)
(74) Representative: Isarpatent

(57) **Abstract**

The present invention provides a method and system for managing versions of graphical programs in a collaborative engineering environment (100). According to the present invention, the method comprises receiving a request to access an updated version of the graphical program (1800) from a user of the collaborative engineering environment (100). The method comprises identifying non-matching sub graphs in client versions of the graphical program (114A-N) and the server version (110), and comparing each element in each non-matching sub graph of said each of the client versions (114A-N) with the elements in the corresponding non-matching sub graph of the server version (110). Moreover, the method comprises generating the updated version of the graphical program (1800) by selectively merging the modified elements which are modified into the server version (110).

## Description

The present invention relates to a field of graphics based programming, and more particularly relates to version management of graphical programs in a collaborative engineering environment.

A graphical programming language (GPL) enables users to create programs by manipulating program elements graphically rather than by specifying them textually. An example of graphical programming language is ladder logic. In ladder logic, a program is mapped to one or more networks, each network contains a power rail on one side whether rungs originate and one or more elements arranged in series or in parallel on the power rail of the networks. Each element contains an operand and an instruction.

Engineering systems provide the users with a program editor to create a program (hereinafter referred to as 'graphical program') by dragging and drop desired graphical program blocks from an element library. Then, the program created in the program editor is complied and downloaded on automation equipment such as a programmable logic controller (PLC) used for industrial control applications.

Currently known engineering systems enable development of graphical program in a collaborative engineering environment. The collaborative engineering environment comprises a server and a multiple client devices connected to the server via network. The client devices comprise an engineering tool which enables respective users to create and store a new graphical program in the server in a collaborative manner. Also, the engineering tool enables the respective user to download and modify a version of the graphical program. For example, in case of ladder logic, the user may add a network or delete a network. Also, the user may modify a network by adding, deleting or modifying one or more elements.

Many a times, a plurality of users simultaneously access and edit the same graphical program at the respective client devices. The modifications made to the graphical program at each client devices are updated to the version of the graphical program stored in the server once the modifications are complete. However, it may happen that, while one or more users are creating/modifying the same graphical program, remaining users may want to access a recent version of the graphical program. In such a case, the server may provide a version of graphical program which was last updated in the server to the requesting user. However, the server version of the graphical program may not contain modifications made by the one or more users on the client devices in real-time. As a consequence, the remaining users may work on older version of the graphical program, resulting in wastage of time and efforts.

Currently known methods relates merging differences in graphical programs by converting input program files into Extensible Markup Language (XML) and manually merging the differences between the XML files. However, this may be time consuming, error prone and cumbersome activity, especially where different versions of the graphical program generated by multiple users have to be merged in the collaborative engineering environment. Also, the merged graphical program may have logic disparity compared to the input program files due to manually merging the differences between the XML files. For example, US8291329B2 discloses a method of automatic merging of graphical programs. In this method, information associated with a first graphical program and a second graphical program is analyzed to determine differences between the first and second graphical programs, and merged graphical program is generated based on the determined differences. The differences between the graphical programs are determined by comparing data structures associated with the information. However, the above method is suitable for merging graphical block diagrams and not for merging graphical programs such as ladder logic. Hence, the merged graphical program such as ladder logic may suffer from logical disparity.

In light of the above, there exists a need for a method and system for efficient version management of graphical programs in the collaborative engineering environment.

Therefore, it is an object of the present invention to provide a method and system which is capable of managing versions of the graphical program by selectively merging the modified elements from different client versions of the graphical program into a server version of the graphical program, and providing an updated version of the graphical program to a requesting client device in the collaborative engineering environment.

The object of the present invention is achieved by a method of managing different versions of a graphical program in a collaborative engineering environment. The method comprises receiving, by a server, a request to access an updated version of the graphical program from a user of the collaborative engineering environment. The method comprises identifying non-matching sub graphs in each client version of the graphical program and the server version, and comparing each element in each non-matching sub graph of said each of the client versions to the elements in the corresponding non-matching sub graph of the server version using hash tables. Each of the client versions (114A-N) is a graphical program being modified at one or more client devices (106A-N). Furthermore, the method comprises determining type of modification made to said each element in said each of the client versions with respect to the server version. For example, the type of modification includes deletion of an element, addition of an element, or modifying an element. Moreover, the method comprises generating the updated version of the graphical program by selectively merging the one or more modified elements with the server version of the graphical program. Additionally, the method comprises sending the updated version of the graphical program to a client device associated with the user.

Therein, in identifying the non-matching sub graphs in each of the client versions of the graphical program and the server version, the method comprises comparing a network in said each client version with a corresponding network in the server version using an element hash table, and determining one or more elements in the network of said each client version having a match with one or more elements in the corresponding network of the server version. The method comprises creating a matching hash table for said each client version and a matching hash table for the server version based on the determined matching elements, and mapping said each element in said each client version with the corresponding matching element in the server version based on the mapping hash tables. The method also comprises determining non-matching sub graphs in said each client version and the server version respectively using a sub graph hash table and an adjacency matrix associated with each non-matching sub graph, wherein each non-matching sub graph comprises a start element, and an end element. Furthermore, the method comprises determining a non-matching sub graph pair from the non-matching sub graphs in said each client version and the server version which has common start element and end element, and determining one or more non-matching sub graphs in said each client version and the server version which do not have common start element and end element.

Therein, in identifying non-matching sub graphs in each of the client versions and the server version, the method comprises determining addition of the sub graph to one or more of the client versions compared to the server version. For example, the sub graphs in the client version which do not have common start element and end element may have been added to the client version.

Therein in identifying the non-matching sub graphs in each of the client versions of the graphical program and the server version, the method comprises determining deletion of the sub graph from one or more of the client versions compared to the server version. For example, the sub graphs in the server version which do not have common start element and end element may have been deleted from the client version.

Therein, in comparing said each element in each non-matching sub graph of said each of the client versions with the elements in the corresponding non-matching sub graph of the server version, the method comprises comparing each element in each sub graph of said each client version to the elements in the corresponding matching sub graph of the server version, and computing an element pair score associated with said each element in the said each client version based on common instruction and operand.

Therein, in computing the element pair score, the method comprises determining whether the instruction in the element in the client version matches with the instruction of the corresponding element in the server version. If there is a match, the method comprises incrementing the element pair score of the element by a pre-defined value.

If there is no match, the method comprises determining whether the operand in the element in the client version matches with the operand of the corresponding element in the server version. If there is a match, the method comprises incrementing the element pair score of the element by a pre-defined value.

If there is no match, the method comprises determining whether the instruction in the predecessor element in the client version matches with the instruction of the corresponding predecessor element in the server version. If there is a match, the method comprises incrementing the element pair score of the element by a pre-defined value.

If there is no match, the method comprises determining whether the operand in the predecessor element in the client version matches with the operand of the corresponding predecessor element in the server version. If there is a match, the method comprises incrementing the element pair score of the element by a pre-defined value.

If there is no match, the method comprises determining whether the instruction in the successor element in the client version matches with the instruction of the corresponding successor element in the server version. If there is a match, the method comprises incrementing the element pair score of the element by a pre-defined value.

If there is no match, the method comprises determining whether the operand in the successor element in the client version matches with the operand of the corresponding successor element in the server version. If there is a match, the method comprises incrementing the element pair score of the element by a pre-defined value.

Therein, determining the type of modification made to said each element in said each of the client versions with respect to the server version, the method comprises pairing one or more elements in the said each client version to the corresponding elements in the server version based on the associated element pair score, wherein the paired elements indicate that at least one of instruction and operand of the elements have been modified in the said each client version. Therein, the method comprises determining elements in the said each client version and the server version which cannot be paired, wherein the non-paired elements indicated that the elements are added or removed from said each client version.

Therein, in generating the updated version of the graphical program, the method comprises determining whether one or more elements are added to at least one of the client versions. If the one or more elements are added, the method comprises adding the one or more elements to the updated version of the graphical program. If the one or more elements are not added, the method comprises determining whether one or more elements are modified in the client versions.

If the one or more elements are modified in the client versions, the method comprises determining a conflict between the modified elements on the graphical user interface of the user. If none of the elements are modified in the client versions, the method comprises determining whether one or more elements are modified in one of the client versions. If the one or more elements are modified in said one of the client versions, the method comprises adding the one or more modified elements to the updated version of the graphical program.

If none of the elements are modified in said one of the client versions, the method comprises determining whether one or more elements are removed from the client versions compared to the server version. If the one or more elements are removed from the client versions, the method comprises removing the one or more elements from the updated version of the graphical program.

If none of the elements are removed from the client versions, the method comprises determining whether one or more elements are removed from one of the client versions. If the one or more elements are removed from one of the client versions, the method comprises retaining the one or more removed elements in the updated version of the graphical program. If none of the elements are removed from one of the client versions, the method comprises determining whether one or more elements are removed from one of the client versions and are modified in said one of the client versions. If the one or more elements are removed from one of the client versions and are modified in remaining client versions, the method comprises removing the one or more elements from the updated version of the graphical program.

Moreover, the method comprises determining addition of a network to one or more of the client versions compared to the server version. The method comprises determining deletion of a network from one or more of the client versions compared to the server version.

The object of the present invention is also achieved by a server comprising a processor, and a memory coupled to the processor. The memory comprises a version management module stored in the form of machine-readable instructions and executable by the processor, wherein the version management module is capable of performing the method described above.

The object of the present invention is also achieved by a collaborative engineering environment comprising a server and a plurality of client devices coupled to the server. The client devices are capable of generating client versions of a graphical program by modifying a server version of the graphical program. The server is capable of performing the method described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a block diagram of a collaborative engineering environment which enables a plurality of users to create a graphical program in a collaborative manner, according to an embodiment of the present invention;
- FIG 2: is a block diagram of a server capable of managing versions of a graphical program in the collaborative engineering environment, according to an embodiment of the present invention;
- FIG 3: is a process flowchart illustrating an exemplary method of managing versions of a graphical program in the collaborative engineering environment, according to an embodiment of the present invention;
- FIG 4: is a process flowchart illustrating an exemplary method of determining modified elements between a client version of the graphical program and a server version of the graphical program, according to an embodiment of the present invention;
- FIG 5: is a process flowchart illustrating an exemplary method of generating an updated version of the graphical program in the collaborative engineering environment, according to an embodiment of the present invention;
- FIG 6A: is a screenshot view depicting a server version of a graphical program;
- FIG6B: is a screenshot view depicting a client version of the graphical program;
- FIG 6C: is a screenshot view depicting another client version of the graphical program;
- FIG 7: is a tabular view of a hash table of elements of the server version of the graphical program;
- FIG 8: is a tabular view of an adjacency matrix associated with the elements of the server version of the graphical program;
- FIG 9: is a tabular view of a hash table of elements of the client version of the graphical program;
- FIG 10: is a tabular view of an adjacency matrix associated with the elements of the client version of the graphical program;
- FIG 11: is a tabular view of a one-to-one mapping dictionary illustrating mapping between matching elements of the client version and the server version;
- FIG 12A: is a screenshot view depicting a non-matching sub graph associated with the server version;
- FIG 12B: is a screenshot view depicting a non-matching sub graph associated with the client version;
- FIG 13: is a tabular view of an adjacency matrix associated with the non-matching sub graph of the server version;
- FIG 14: is a tabular view of an adjacency matrix associated with a non-matching sub graph of the client version;
- FIG 15: is a tabular view illustrating an element pair score associated with the elements in the server version and the corresponding elements in the client version;
- FIG 16: is a tabular view depicting pairing of the elements of the client version and the server version based on the element pair score;
- FIG 17: is a tabular view illustrating modifications made to the elements in the client version as compared to the elements in the server version; and
- FIG 18: is a screenshot view illustrating an updated version of the graphical program.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

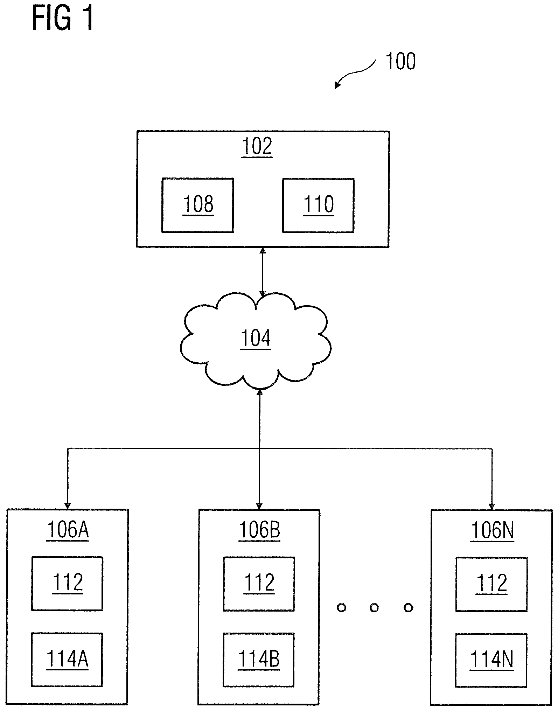

FIG 1 is a block diagram of a collaborative engineering environment 100 which enables a plurality of users to create a graphical program in a collaborative manner, according to an embodiment of the present invention. The collaborative engineering environment 100 includes a server 102 and client devices 106A-N. The client devices 106A-N are connected to the server 102 via a network such as Local Area Network (LAN), Wide Area Network (WAN), Wi-Fi, etc.

The server 102 comprises a program version management module 108 and a server version of a graphical program 110. The program version management module 108 may be stored in the form of machine-readable instructions. The server 102 may be a standalone server or a server on a cloud. The server version of the graphical program 110 may include edits made to the graphical program which has been completed by the client devices 106A-N but not including modification which are in progress at the client devices 106AA-N.

The client devices 106A-N may be a desktop computer, laptop computer, tablet, smart phone and the like. Each of the client devices 106A-N is provided with an engineering tool 112 for creating and/or editing graphical programs respectively. The client devices 106A-N may enable users to download the server version of the graphical program and create the client versions of the graphical program 114A-N.

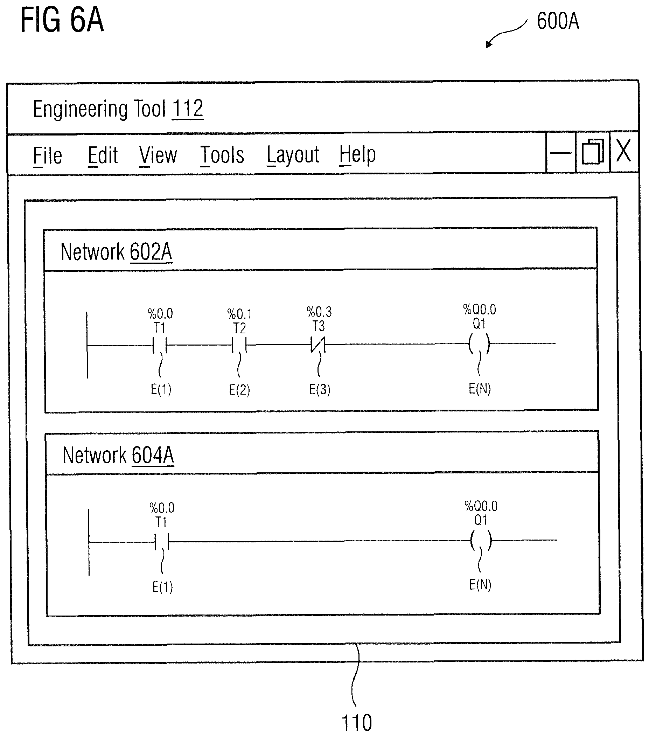

In an exemplary operation, one or more client devices 106A-N may request the server 102 to provide access to the server version of the graphical program 110. In response, the server 102 provides a copy of the server version 110 to the one or more client devices 106A-N. A screenshot view 600A of an exemplary server version 110 is shown in FIG 6A. As depicted, the server version 110 has a network 602A and a network 604A. The network 602A has four elements (E(1), E(2), E(3), E(N)) and the network 604A has two elements (E1, EN). Accordingly, the one or more client devices 106A-N create client versions 114A-N from the server version 110 and displays the client version 114A-N in the graphical user interface associated with the engineering tool 112.

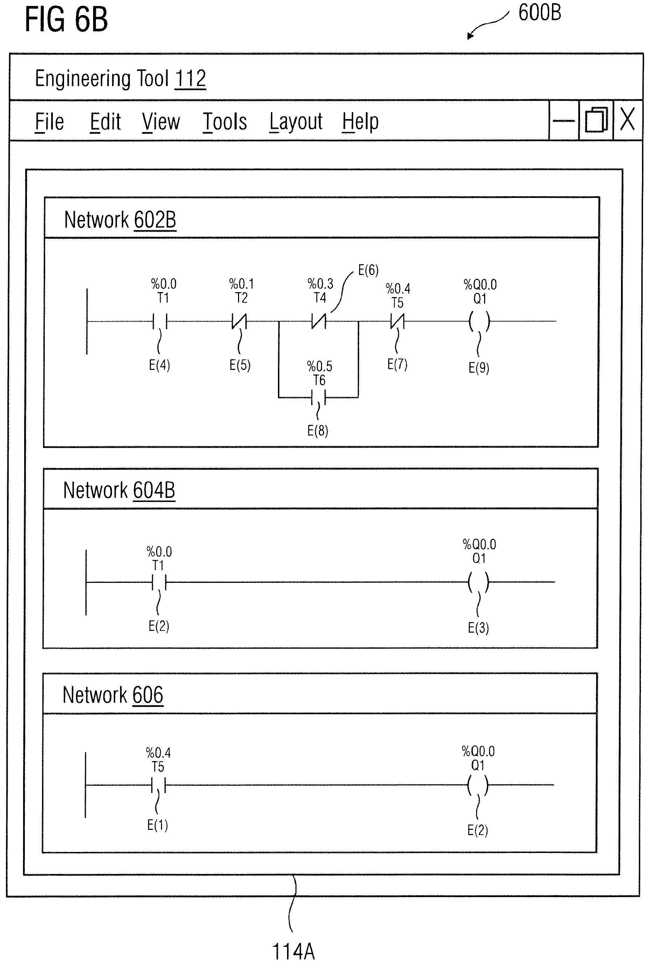

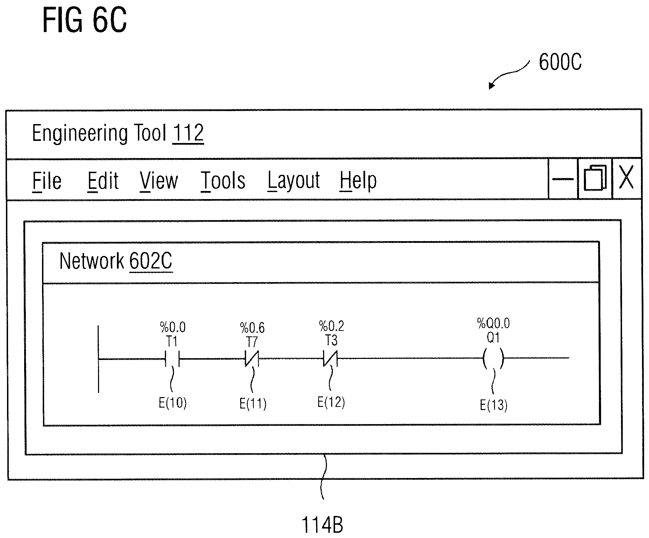

The users of the one or more client devices 106A-N may modify the respective client versions 114A-N in a collaborative manner. A screenshot view 600B of an exemplary client version 114A modified at the client device 106A is shown in FIG 6B. The client version 114A includes a network 602B, a network 604B and a network 606. It can be seen from FIG 6B that the network 602A in the server version 110 is modified by adding/deleting/modifying elements to form the network 602B in the client version 114A. Also, the network 606 is added in the client version 114A. Similarly, a screenshot view 600C of the client version 114B edited at the client device 106B is shown in FIG 6C. It can be seen from FIG 6C that the network 602A in the server version 110 is modified to form the network 602C at the client version 114B. Also, in the client version 114B, the network 604A is deleted as compared to the server version 110.

Consider that, one of the client devices (e.g., client device 106C) may request the server 110 to provide recent server version of the graphical program 110. In such a case, the version management module 108 obtains the client versions 114A-N being modified by the users from the one or more client devices 106A-N. For example, the version management module 108 may determine which of the client devices 106A-N are editing the client versions 114A-N based on a graphical program edit log data. The version management module 108 determines modified elements between each of the client versions 114A-N being modified and the server version 110 using hash tables. Based on the modified elements, the version management module 108 determines whether the elements are changed, added or deleted in said each client version with respect to the server version 110. Accordingly, the version management module 108 determines whether the server version 110 needs to be updated with the modifications made to the client versions 114A-N. The version management module 108 may selectively update the server version 110 using the one or more modified elements to generate an updated version of the graphical program. The server 102 sends a copy of the updated version of the graphical program to the client device 106C which is displayed on the engineering tool 112. The user of the client device 106C can make any modifications to the updated version of the graphical program.

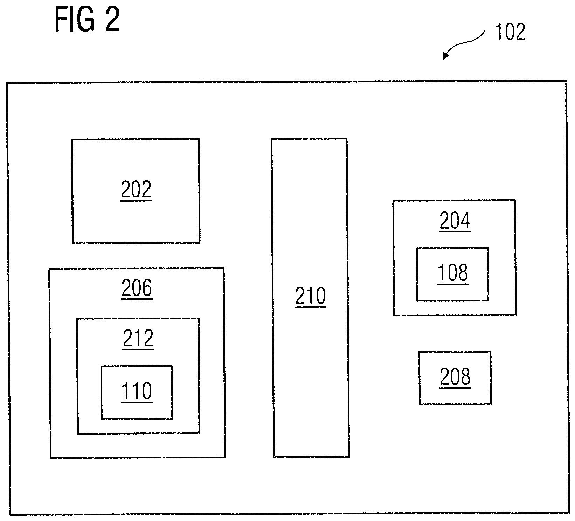

FIG 2 is a block diagram of the exemplary server 102 capable of managing versions of the graphical program in the collaborative engineering environment 100, according to an embodiment of the present invention. The server 102 comprises a processor 202, a memory 204, a storage unit 206, a network interface 208, and a bus 210.

The processor 202, as used herein, means any type of computational circuit, such as, but not limited to, a microprocessor, a microcontroller, a complex instruction set computing microprocessor, a reduced instruction set computing microprocessor, a very long instruction word microprocessor, an explicitly parallel instruction computing microprocessor, a graphics processor, a digital signal processor, or any other type of processing circuit. The processor 202 may also include embedded controllers, such as generic or programmable logic devices or arrays, application specific integrated circuits, single-chip computers, and the like.

The memory 204 may be volatile memory and non-volatile memory. A variety of computer-readable storage media may be stored in and accessed from the memory 204. The memory 204 may include any suitable elements for storing data and machine-readable instructions, such as read only memory, random access memory, erasable programmable read only memory, electrically erasable programmable read only memory, hard drive, removable media drive for handling compact disks, digital video disks, diskettes, magnetic tape cartridges, memory cards, and the like. As depicted, the memory 204 includes the program version management module 108. The program version management module 108 is stored in the form of machine-readable instructions on any of the above-mentioned storage media and may be executed by the processor 202.

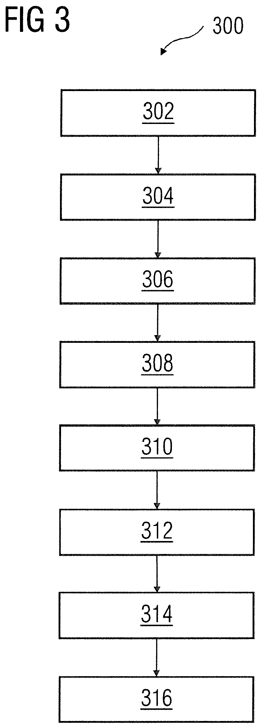

For example, when the instructions are executed by the processor 202, the version management module 108, causes the processor 202, to determine changes made to the client versions of the graphical program 114A-N using hash tables and generate an updated version of a graphical program by merging changes made to the client versions of the graphical program 114A-N with the server version of the graphical program 110. The steps performed by the processor 102 to generate the updated version of the graphical program in the collaborative engineering environment 100 are described in greater detail with reference to FIGs 3 to 5 in the below description.

The storage unit 206 may be a non-transitory storage medium configured for storing the program database 212 which comprises the server version of the graphical program 110.

The network interface 208 may be a communication interface which enables the server 102 to communicate with the client devices 106A-N via the network 104. The bus 210 act as interconnect between the different components of the server 102.

FIG 3 is a process flowchart 300 illustrating a method of managing versions of a graphical program in the collaborative engineering environment 100, according to an embodiment of the present invention. For the purpose of illustration, consider that a server version of the graphical program 110 is currently being accessed by the client device 106A and the client device 106B. Also, consider that the client device 106A creates a client version 114A and the client device 106B creates a client version 114B from the server version 110. It can be noted that, a plurality of client devices can simultaneously access and edit the server version 110 in the collaborative engineering environment 100.

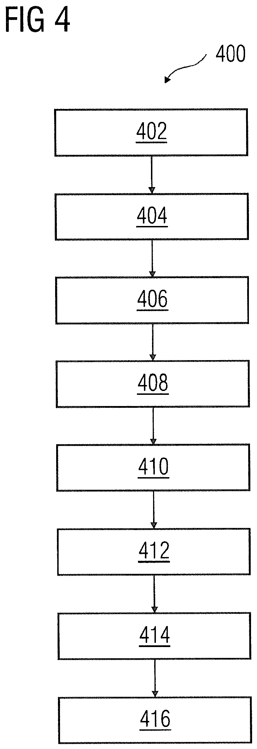

Now, the user of the client device 106C wishes to access a recent version of the graphical program. The recent version of the graphical program refers to a version created from the server version 110, the client version 114A, and the client version 114B. At step 302, a request to access an updated version of the graphical program is received from the client device 106C. At step 304, non-matching sub graphs in the client version 114A and the server version 110 are identified. The process steps involved in identifying the non-matching sub graphs in the client version 114A and the server version 110 is described in greater detail with respect to FIG 4. At step 306, non-matching sub graphs in the client version 114B and the server version 110 are identified. It can be noted that, the process steps involved in identifying the non-matching sub graphs in the client version 114B are same as the process steps for identifying the non-matching sub graphs in the client version 114A. At step 308, each element in said each non-matching sub graph of the client versions 114A-B is compared with the elements in the corresponding non-matching sub graph of the server version 110 using hash tables. At step 310, type of modification made to said each element in the client versions 114A-B with respect to the server version 110 is determined.

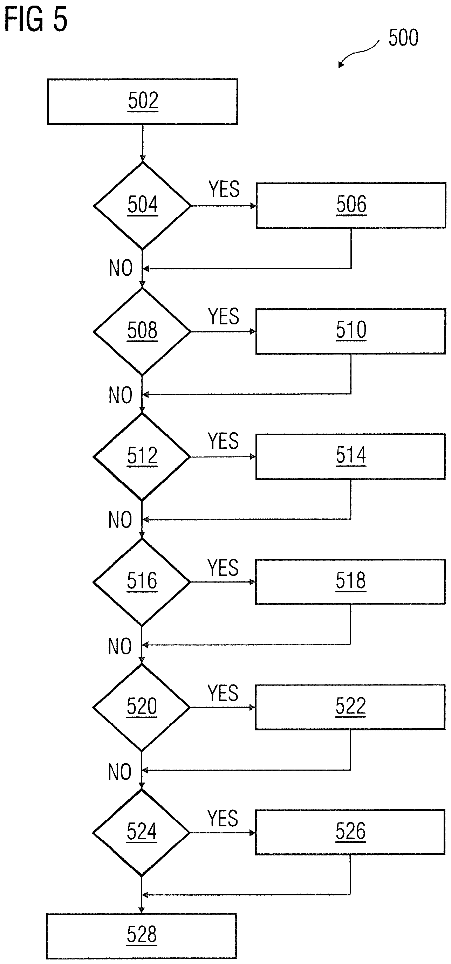

At step 312, conflicts between the modified elements in the client version 114A and the client version 114B are determined. At step, 314, an updated version of the graphical program is generated by selectively merging the modified elements with the server version of the graphical program 110 based on the type of modifications made to said each element in the client versions 114A-B. The detailed steps involved in generating the updated version of the graphical program are described with reference to FIG 5. At step 316, the updated version of the graphical program is sent to the client device 106C via the network 104. The updated version of the graphical program is displayed in the engineering tool 112 of the client device 106C. In this manner, the user of the client device 106C is given access to the recent version of the graphical program which includes modification made to the server version 110 by the client devices 106A and 106B in real time.

FIG 4 is a process flowchart 400 illustrating an exemplary method of determining modified elements between the client version 114A and the server version of the graphical program 110, according to an embodiment of the present invention. For the purpose of the illustration, consider that the graphical program is a ladder logic comprising one or more networks. The following steps are performed by the server 102 to identify elements of the network which are added, removed or modified in a client version of the graphical program. Let us consider that the client version 114A is compared with the server version 110 to determine the modified elements. If the client version 114A and the server version 110 have more than one network, then each of the networks with same network identifier in the client version 114A and the server version 110 are compared to identify modified elements within said each network.

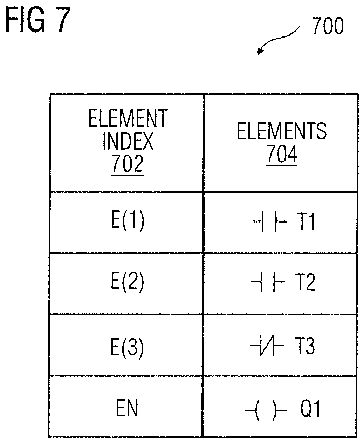

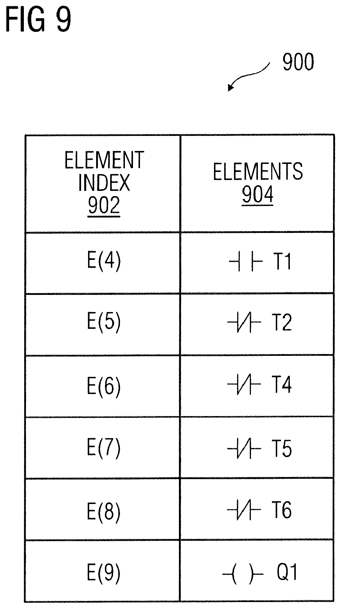

At step 402, an element hash table indicating a list of elements is created for the client version 114A and the server version 110 respectively. Each element in the element hash table contains operand and instruction type. An exemplary element hash table 700 associated with the server version 110 is illustrated in FIG 7. The hash table 700 comprises an element index field 702 and an element field 704. The element field 704 indicates the elements in the network 602A of the server version 110. For example, the element field 704 lists four elements (i.e., T1, T2, T3, Q1) of the network 602A. The element index field 702 indicates index values corresponding to the elements of the network 602A. For example, the element index field 702 indicates that the element T1 is assigned an index value E(1) as T1 is first element following a power rail of the network 602A. An element hash table 900 associated with the client version 114A is illustrated in FIG 9.

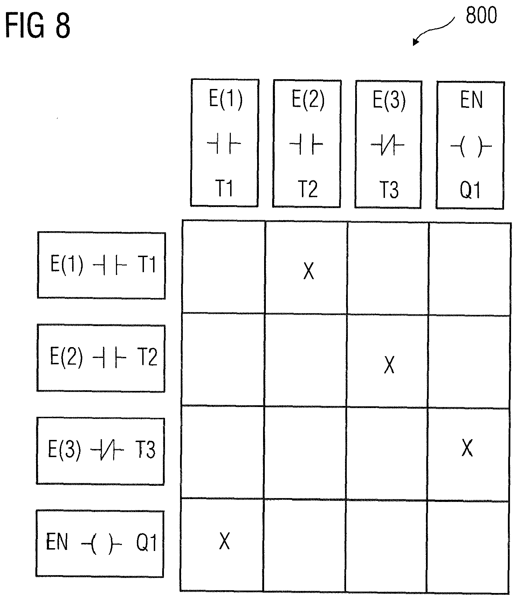

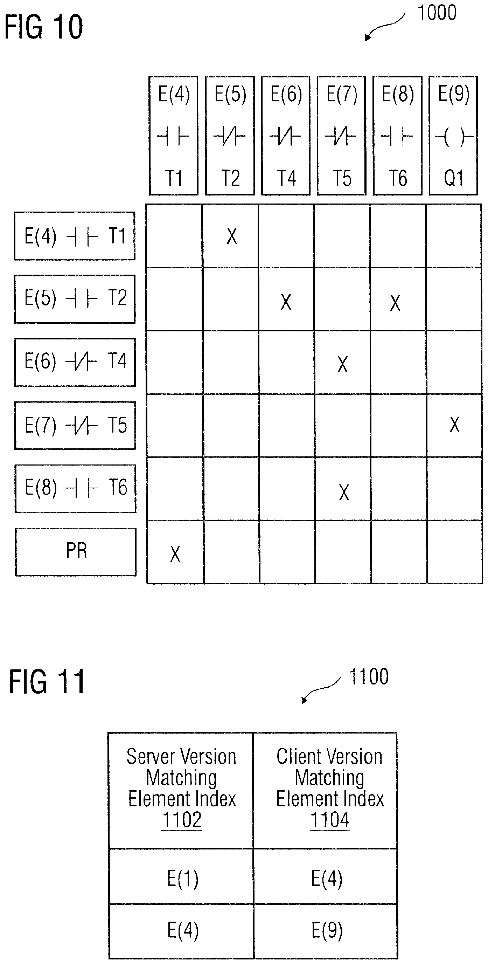

At step 404, an adjacency matrix indicating adjacency of elements in the network is generated for the client version 114A and the server version 110 respectively. Exemplary adjacency matrix 800 associated with the server version 110 is illustrated in FIG 8. The adjacency matrix 800 indicates adjacency of the elements with respect to other elements in the network 602A. For example, it can be seen from the adjacency matrix 800 that the element E(2) is indicated as adjacent to the element E(1) in the network 602A. Also, the adjacency matrix 800 indicates that the element E(3) is adjacent to the element E(2) in the network 602A. Similarly, an adjacency matrix 1000 associated with the client version 114A is shown in FIG 10.

At step 406, matching elements in the network of the client version 114A and the server version 110 are determined using graph matching algorithm. Exemplary graph matching algorithm is disclosed in patent publication no. US201203044148A1. The matching elements are the elements which are present in the network of the client version 114A and the server version 110.

At step 408, a matching hash table containing a sub list of matching elements is created for the network of the client version 114A and the server version 110. The elements in the matching hash table comprise an operand, instruction type and a rank. The rank of each matching element is determined by subtracting number of elements in a path to the element from number of modified elements in the path. The path to the element starts from a power rail node.

At step 410, the matching elements in the matching hash table associated with the server version 110 and the matching elements in the matching hash table associated with the client version 114 are mapped. In an exemplary implementation, one-to-one mapping dictionary which maps index values of the matching elements in the server version 110 to the matching elements in the client version 114A is created. For example, a mapping between the matching elements is identified by comparing each matching element in the server version 110 with the matching elements in the client version 114A. When a corresponding matching element in the client version 114A is found, the corresponding matching element is removed from the matching hash tables and an entry is created in the one-to-one mapping dictionary. An exemplary one-to-one mapping dictionary 1100 is illustrated in FIG 11. The one-to-one mapping dictionary 1100 is created based on mapping of matching elements in the network 602A and the network 602B. The mapping dictionary 1100 indicates elements which are common in the server version 110 and the client version 114A. The mapping dictionary 1100 comprises a server matching element index field 1102 and a client matching element index field 1104. The index field 1102 indicates index values associated with the elements in the network 602A of the server version 110. The index field 1104 indicates index values associated with the elements in the network 602B of the client version 114A. For example, the mapping dictionary 1100 depicts that the element with the index value E(1) in the server version 110 matches with the element with the index value E(4) in the client version 114A.

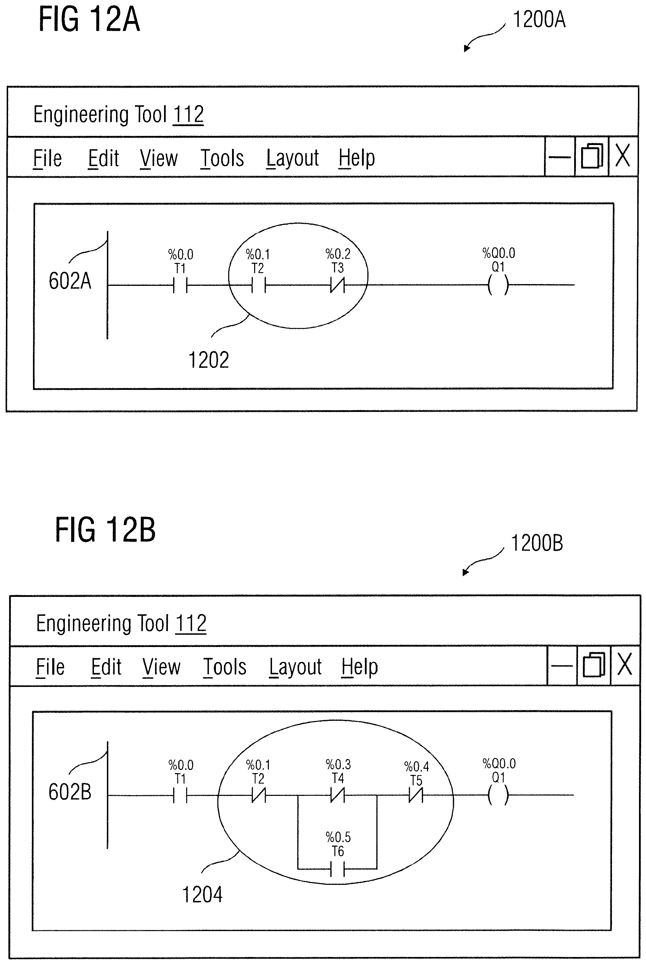

At step 412, a sub graph hash table indicating non-matching sub graphs in the server version 110 and the client version 114A is generated. For example, non-matching sub graphs 1202 and 1204 corresponding to the network 602A of the server version 110 and the network 602B of the client version 114A are depicted in a screenshot view 1200A of FIG 12A and the screenshot view 1200B of FIG 12B respectively. A sub graph hash table is generated based on the elements in the non-matching sub graphs 1202 and 1204.

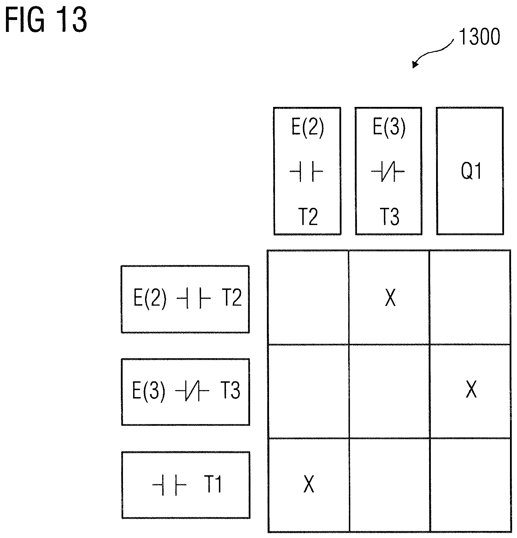

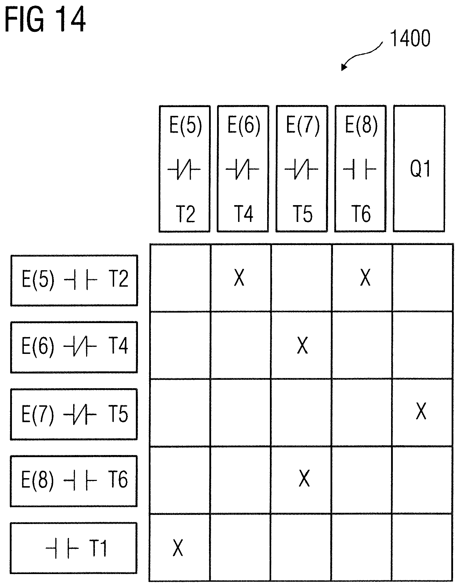

Also, at step 412, an adjacency matrix for the sub graphs in the server version 110 and the client version 114A is generated. The adjacency matrix corresponds to each entry in the sub graph hash table. The adjacency matrix contains start element and end element of the sub graph. A start element is a 'matching element' which is a direct predecessor of the sub graph whereas an end element is a 'matching element' which is direct successor of the sub graph. Exemplary adjacency matrix 1300 corresponding to the sub graph 1202 in the server version 110 is depicted in FIG 13. Similarly, an adjacency matrix 1400 corresponding to the sub graph 1204 in the client version 114A is depicted in FIG 14.

At step 414, one or more sub graph in the client version 114A which have the same start element and end element corresponding to each non-matching sub graph in the server version are identified. The sub graphs which have same start element and end element are referred as sub graph pair. The formation of the sub graph pair implies that the sub graph is modified in the client version 114A. At step 416, one or more sub graphs in the client version 114A and the server version which do not have common start element and end element are identified. If no matching sub graph is found in the client version 114A, it means that the sub graph is deleted in the client version 114A. If the sub graph is deleted in the client version 114A, the sub graph is deleted from an updated version of the graphical program. If no matching sub graph is present in the server version 110, then it implies that a sub graph is added to the client version 114A. If the sub graph is added to the client version 114, the sub graph is also added in an updated version of the graphical program.

If the sub graph 1204 in the client version 114A is modified, the elements in each sub graph 1204 of the client version 114A are mapped to the elements in corresponding sub graph 1202 of the server version 110 to identify modifications made to the sub graph 1204. In an exemplary implementation, each element in the adjacency matrix 1300 of the sub graph 1202 in the server version 110 is compared with the elements in the corresponding adjacency matrix 1400 of the sub graph 1204 in the client version 114A. The elements in the sub graph 1204 of the client version 114A are weighted by an element pair score based on the presence of common instruction or operand in the client version 114A and the server version 110. For example, an element pair score of the element in the sub graph 1204 of the client version 114A is incremented by a value '1' in following instances:
a) the instruction of the element matches with the instruction of the element in the sub graph 1202 of the server version 110;
b) the operand of the element matches with the operand of the element in the sub graph 1202 of the server version 110;
c) the instruction of the predecessor element matches with the instruction of the predecessor element in the sub graph 1202 of the server version 110;
d) the operand of the predecessor element matches with the operand of the predecessor element in the sub graph 1202 of the server version 110;
e) the instruction of the successor element matches with the instruction of the successor element in the sub graph 1202 of the server version 110; or
f) the operand of the successor element matches with the operand of the successor element in the sub graph 1202 of the server version 110.

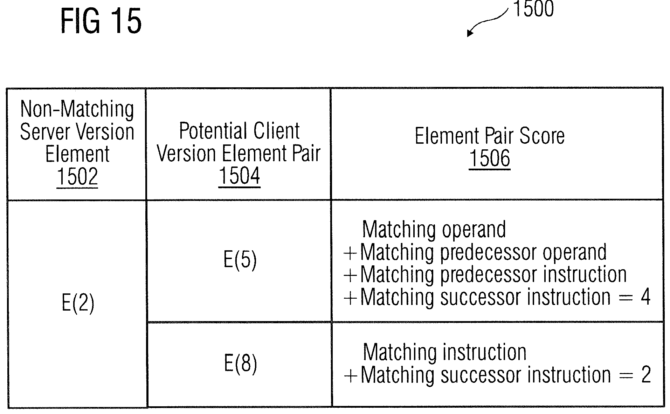

Referring to FIG 15 which depicts a tabular representation 1500 comprising a non-matching server element field 1502, a potential client element pair field 1504, and an element pair score field 1506. The non-matching server element field 1502 indicates an element in the sub graph 1202 of the server version 110. The potential client element pair field 1504 indicates elements in the sub graph 1204 of the client version 114A which are potential candidate for forming a pair for an element E(2). The potential client element pair field 1504 shows elements E(5) and E(8) as potential candidate for forming pair with the element E(2). The element pair score field 1506 displays an element pair score associated with the element E(5) and the element E(8) corresponding to the element E(2). It can be seen from FIG 15, the element E(5) has an element pair score equal to '4' as operand, predecessor operand, predecessor instruction and successor instructions are common between the element E(5) and the element E(2). The element E(8) has an element pair score equal to '2' as instruction and successor instruction are common between the element E(8) and the element E(2). Hence, the element E(5) has highest element pair score compared to the element E(8).

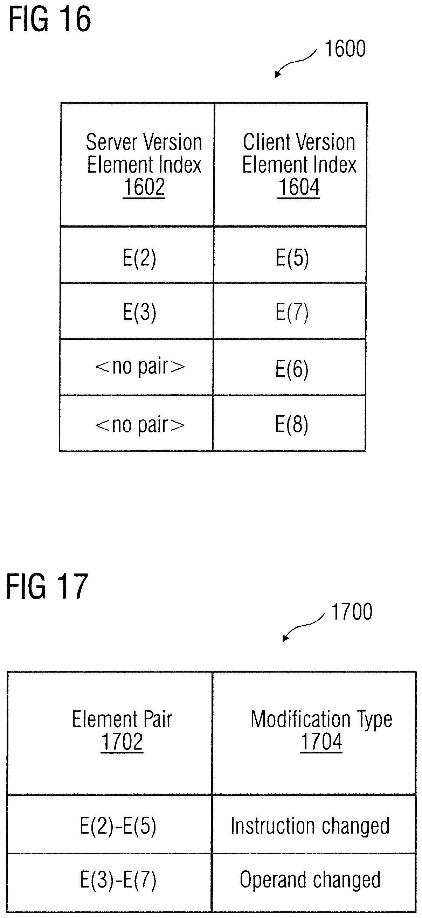

The element in the sub graph 1204 of the client version 114A which has highest element pair score corresponding to the element in the sub graph 1202 of the server version 110 is paired with the element in the sub graph 1202 of the server version 110. The element in the client version 114A which do not have a corresponding element in the server version 110 may have been added to the client version 114A. The element in the server version 110 which do not corresponding element in the client version 114A may have been deleted from the client version 114A. Referring to FIG 16, a tabular representation 1600 is shown with a server version element field 1602 and a client version element field 1604. The server version element field 1602 indicates elements in the sub graph 1202 of the server version 110. The client version element field 1604 indicates elements in the sub graph 1204 of the client version 114A which forms a pair with the elements in the server element field 1602 based on the highest element score. It can be seen from FIG 16 that the element E(5) in the client element field 1604 is paired with the element E(2) in the server element field 1602 based on the highest element score. It can also be noted from FIG 16 that the elements in the client element field 1604 do not corresponding paired element in the server element field 1602. These elements are added to the client version 114A and hence do not have corresponding paired element from the server version 110.

For each paired element in the client version 114A, the instruction/operand in the element of the client version 114A may have been modified. The information associated with the elements pairs in the hash tables 700 and 900 is compared to determine whether operand or instruction associated with the element in the client version 114A is modified. As shown FIG 17, a tabular representation 1700 contains an element pair field 1702 and a modification type field 1704. The element pair field 1702 displays a pair between the element of the server version 110 and the element of the client version 114A. The modification type field 1704 displays the type of modification made to the element in the sub graph 1204 of the client version 114A. For example, as depicted in FIG 17, the instruction associated with the element E(5) is changed in the client version 114A compared to the server version 110. Similarly, for the element E(7), the operand of the element E(7) is changed in the client version 114A compared to the server version 110. The above steps are repeated for all non-matching sub graphs.

FIG 5 is a process flowchart 500 illustrating an exemplary method of generating the updated version of the graphical program in the collaborative engineering environment 100, according to an embodiment of the present invention. At step 502, a copy of the server version of the graphical program 110 is created. The modifications in the client version 114A and the client version 114B are made to the copy of the server version 110. The copy of the server version 110 is hereinafter referred to as updated version of the graphical program.

At step 504, it is determined whether one or more elements are added to any of the client version 114A and the client version 114B. If one or more elements are added, then at step 506, the one or more elements are added to the updated version of the graphical program and a step 508 is performed. If no elements are added, then the step 508 is performed.

At step 508, it is determined whether one or more elements are modified in the client version 114A and the client version 114B. If one or more elements are modified, then at step 510, conflict between the modified elements and the corresponding elements of the server version is output on the client device 106C and a step 512 is performed. If no elements are added, then the step 512 is performed.

At step 512, it is determined whether one or more elements are modified in one of the client version 114A and the client version 114B. An element is said to be modified if one of instruction and operand in the element is changed in a client version. If one or more elements are modified in one of the client version 114A and the client version 114B, then at step 514, the one or more elements are added to the updated version of the graphical program and a step 516 is performed. If no elements are added, then the step 516 is performed.

At step 516, it is determined whether one or more elements are removed from the client version 114A and the client version 114B. If one or more elements are removed from the client version 114A and the client version 114B, then at step 518, the one or more elements are removed to the updated version of the graphical program and a step 520 is performed. If no elements are added, then the step 520 is performed.

At step 520, it is determined whether one or more elements are removed from one of the client version 114A and the client version 114B. If one or more elements are removed from one of the client version 114A and the client version 114B, then at step 522, the one or more elements are retained in the updated version of the graphical program and a step 524 is performed. If no elements are added, then the step 524 is performed.

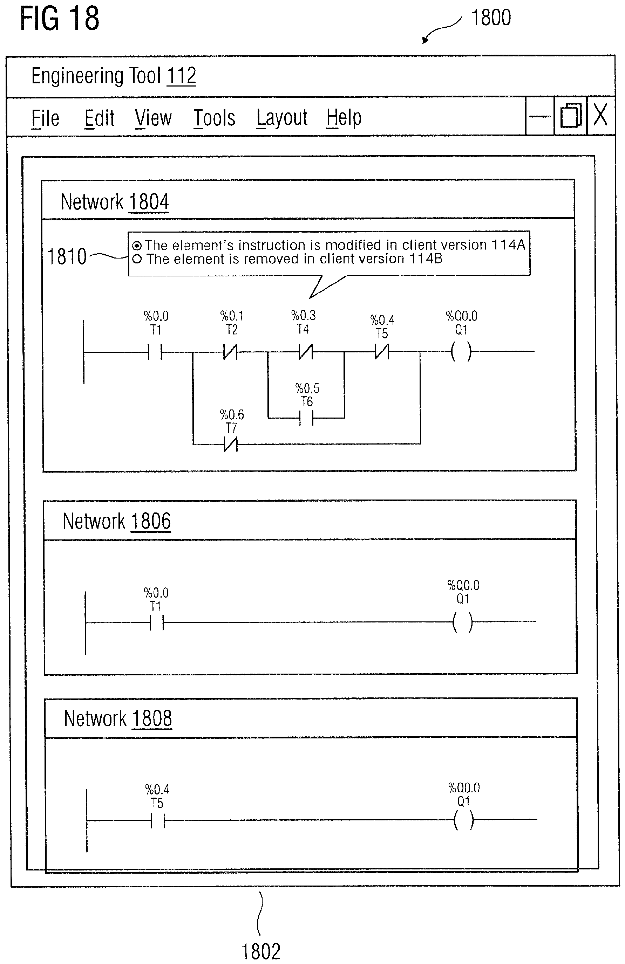

At step 524, it is determined whether one or more elements are removed from one of the client version 114A and the client version 114B and modified in other of the client version 114A and the client version 114B. If one or more elements are removed from one of the client version 114A and the client version 114B and modified in other of the client version 114A and the client version 114B, then at step 526, the one or more elements are removed from the updated version of the graphical program and the process 500 is terminated at step 528. If no elements are removed and terminated, then the process 500 is terminated at step 528. An exemplary graphical user interface 1800 of the engineering tool 112 displaying an updated version of a graphical program 1802 on the client device 114C is shown in FIG 18.

The updated version of the graphical program 1802 comprises a network 1804, a network 1806 and a network 1808. The network 1804 is modified by the client devices 106A and 104N. The network 1806 and the network 1808 are added to the graphical program. It can be seen that the graphical user interface 1800 also depicts a conflict between the modifications made to the client version 114A and the client version 114B. For example, the conflict notification 1810 indicates that there is a conflict between the client version 114A and the client version 114B. In the client version 114A, the element's instruction (T2) is modified whereas in the client version 114B, the element (T2) is removed. The graphical user interface 1800 provides options selectable by the user of the client device 114C so that the modifications can be incorporated in the updated version of the graphical program 1802 based on the user selection. In this manner, the updated version of the graphical program 1802 is generated and provided to the user.

The foregoing description of FIG 1-18 provides methods and systems for generating an updated version of a graphical program if a network in a client version of the graphical program is modified (i.e., one or more elements are added, deleted or modified). It is possible that the network may be added or deleted from a client version. For example, a network 606 is added to the client version 114 in FIG 6B whereas the network 604A is removed from the client version 114A in FIG 6C. When a network is added in the client version of the graphical program, the server 102 determines addition of the network in the client version and adds the network to the updated version of the graphical program. When the network is removed from the client version of the graphical program and the network is not been modified in another client version, the server 102 determines that the network is removed from the client version and does not retain the network in the updated version of the graphical program. If the network is removed from one client version and has been modified in other client version, the server 102 retains the network in the updated version of the graphical program. However, the network is shown as a conflict to a user. If the network is removed from all client versions, the server 102 removes the network from the updated version of the graphical program.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

## Claims

1. A computer-implemented method of managing different versions of a graphical program in a collaborative engineering environment (100), the method comprising:
receiving, by a server (102), a request to access an updated version of the graphical program (1800) from a user of the collaborative engineering environment (100);
identifying non-matching sub graphs (1202, 1204) in client versions of the graphical program (114A-N) and the server version (110), wherein said each of the client versions (114AN) is a graphical program being modified at one or more client devices (106A-N);
comparing each element in each non-matching sub graph (1204) of said each of the client versions (114A-N) with the elements in the corresponding non-matching sub graph (1202) of the server version (110) using hash tables;
determining type of modification made to said each element in said each of the client versions (114A-N) with respect to the server version (110); and
generating the updated version of the graphical program (1800) by selectively merging the one or more modified elements in the server version of the graphical program (110) based on the type of modifications made to said each element in said each of the client versions (114A-N).

2. The method according to claim 1, further comprising:
sending the updated version of the graphical program (1800) to a client device (106) associated with the user.

3. The method according to claim 1 or 2, wherein identifying the non-matching sub graphs (1202, 1204) in the client versions (114A-N) and the server version (110) comprises:
comparing a network (602B, 604B) in said each client version (114A) with a corresponding network (602A, 604A) in the server version (110) using the hash table (800, 1000);
determining one or more elements in the network (602B, 604B) of said each client version (114A) which matches with one or more elements in the corresponding network (602A, 604A) of the server version (110);
creating a matching hash table for said each client version (114A) and a matching hash table for the server version (110) based on the determined matching elements;
mapping said each element in said each client version (114A) with the corresponding matching element in the server version (110) based on the matching hash tables;
determining non-matching sub graphs (1202, 1204) in said each client version (114A) and the server version (110) respectively using a sub graph hash table and an adjacency matrix associated with each non-matching sub graph, wherein each non-matching sub graph (1202, 1204) comprises a start element, and an end element;
determining a non-matching sub graph pair from the non-matching sub graphs (1202, 1204) in said each client version (114A) and the server version (110) which has common start element and end element; and
determining one or more non-matching sub graphs in said each client version (114A) and the server version (110) which do not have common start element and end element.

4. The method according to claim 3, wherein comparing said each element in said each non-matching sub graph (1204) of said each of the client versions (114A-N) with the elements in the corresponding non-matching sub graph (1202) of the server version (110) comprises:
comparing each element in each sub graph of said each client version (114A) to the elements in the corresponding sub graph of the server version (110); and
computing a element pair score associated with said each element in the said each client version (114A) based on common instruction and operand.

5. The method according to any of the preceding claims 1 to 4, wherein determining the type of modification made to said each element in said each of the client versions (114A-N) with respect to the server version (110) comprises:
pairing one or more elements in the said each client version (114A) to the corresponding elements in the server version (110) based on the associated element pair score, wherein the paired elements indicate that at least one of instruction and operand of the elements have been modified in the said each client version (114A); and
determining elements in the said each client version (114A) and the server version (110) which cannot be paired, wherein the non-paired elements indicate that the elements are added or removed from said each client version (114A).

6. The method according to one of the preceding claims 1 to 5, wherein generating the updated version of the graphical program (1800) comprises:
determining whether one or more elements are added to at least one of the client versions (114A-N);
if the one or more elements are added, adding the one or more elements to the updated version of the graphical program (1800);
if the one or more elements are not added, determining whether one or more elements are modified in the client versions (114A-N);
if the one or more elements are modified in the client versions (114A-N), determining a conflict between the modified elements;
if none of the elements are modified in the client versions (114A-N), determining whether one or more elements are modified in one of the client versions (114A-N);
if the one or more elements are modified in said one of the client versions (114A-N), adding the one or more modified elements to the updated version of the graphical program (1800);
if none of the elements are modified in said one of the client versions (114A-N), determining whether one or more elements are removed from the client versions (114A-N) compared to the server version (110);
if the one or more elements are removed from the client versions (114A-N), removing the one or more elements from the updated version of the graphical program (1800);
if none of the elements are removed from the client versions (114A-N), determining whether one or more elements are removed from one of the client versions (114A-N);
if the one or more elements are removed from one of the client versions (114A-N), retaining the one or more removed elements in the updated version of the graphical program (1800);
if none of the elements are removed from one of the client versions (114A-N), determining whether one or more elements are removed from one of the client versions (114A-N) and are modified in said one of the client versions (114A-N); and
if the one or more elements are removed from one of the client versions (114A-N) and are modified in remaining client versions (114A-N), removing the one or more elements from the updated version of the graphical program (1800).

7. The method according to one of the preceding claims 1 to 6, wherein identifying non-matching sub graphs in each of the client versions (114A-N) and the server version (110):
determining addition of the sub graph to one or more of the client versions (114A-N) compared to the server version (110).

8. The method according to one of the preceding claims 1 to 6, wherein identifying the non-matching sub graphs in each of the client versions of the graphical program (114A-N) and the server version (110):
determining deletion of the sub graph from one or more of the client versions (114A-N) compared to the server version (110).

9. The method according to the claims 4 to 6, wherein computing the element pair score associated with said each element in the said each client version (114A) comprises:
determining whether the instruction in the element in the client version (114A) matches with the instruction of the corresponding element in the server version (110);
if there is a match, incrementing the element pair score of the element by a pre-defined value;
if there is no match, determining whether the operand in the element in the client version (114A) matches with the operand of the corresponding element in the server version (110);
if there is a match, incrementing the element pair score of the element by the pre-defined value;
if there is no match, determining whether the instruction in the predecessor element in the client version (114A) matches with the instruction of the corresponding predecessor element in the server version (110);
if there is a match, incrementing the element pair score of the element by the pre-defined value;
if there is no match, determining whether the operand in the predecessor element in the client version (114A) matches with the operand of the corresponding predecessor element in the server version (110); and
if there is a match, incrementing the element pair score of the element by the pre-defined value;
if there is no match, determining whether the instruction in the successor element in the client version (114A) matches with the instruction of the corresponding successor element in the server version (110);
if there is a match, incrementing the element pair score of the element by the pre-defined value;
if there is no match, determining whether the operand in the successor element in the client version (114A) matches with the operand of the corresponding successor element in the server version (110); and
if there is a match, incrementing the element pair score of the element by the pre-defined value.

10. A server (102) comprising:
a processor (202);
a memory (204) coupled to the processor (202), wherein the memory (202) comprises a version management module (108) stored in the form of machine-readable instructions and executable by the processor (202), wherein the version management module (108) is capable of:
identifying non-matching sub graphs (1202, 1204) in client versions of the graphical program (114A-N) and the server version (110), wherein said each of the client versions (114A-N) is a graphical program being modified at one or more client devices (106A-N);
comparing each element in each non-matching sub graph (1204) of said each of the client versions (114A-N) with the elements in the corresponding non-matching sub graph (1202) of the server version (110);
determining type of modification made to said each element in said each of the client versions (114A-N) with respect to the server version (110); and
generating the updated version of the graphical program (1800) by selectively merging the one or more modified elements in the server version of the graphical program (110) based on the type of modifications made to said each element in said each of the client versions (114A-N).

11. The server (102) according to claim 10, wherein in identifying the non-matching sub graphs (1202, 1204) in the client versions (114A-N) and the server version (110), the version management module (108) is capable of:
comparing a network (602B, 604B) in said each client version (114A) with a corresponding network (602A, 604A) in the server version (110) using the hash table (800, 1000);
determining one or more elements in the network (602B, 604B) of said each client version (114A) which matches with one or more elements in the corresponding network (602A, 604A) of the server version (110);
creating a matching hash table for said each client version (114A) and a matching hash table for the server version (110) based on the determined matching elements;
mapping said each element in said each client version (114A) with the corresponding matching element in the server version (110) based on the matching hash tables;
determining non-matching sub graphs (1202, 1204) in said each client version (114A) and the server version (110) respectively using a sub graph hash table and an adjacency matrix associated with each non-matching sub graph, wherein each non-matching sub graph (1202, 1204) comprises a start element, and an end element;
determining a non-matching sub graph pair from the non-matching sub graphs (1202, 1204) in said each client version (114A) and the server version (110) which has common start element and end element; and
determining one or more non-matching sub graphs in said each client version (114A) and the server version (110) which do not have common start element and end element.

12. The server (102) according to claims 10 or 11, wherein in comparing said each element in said each non-matching sub graph (1204) of said each of the client versions (114A-N) with the elements in the corresponding non-matching sub graph (1202) of the server version (110), the version management module (108) is capable of:
comparing each element in each sub graph of said each client version (114A) to the elements in the corresponding matching sub graph of the server version (110); and
computing a element pair score associated with said each element in the said each client version (114A) based on common instruction and operand.

13. The server (102) according to claim 12, wherein in determining the type of modification made to said each element in said each of the client versions (114A-N) with respect to the server version (110), the version management module (108) is capable of:
pairing one or more elements in the said each client version (114A) to the corresponding elements in the server version (110) based on the associated element pair score, wherein the paired elements indicate that at least one of instruction and operand of the elements have been modified in the said each client version (114A); and
determining elements in the said each client version (114A) and the server version (110) which cannot be paired, wherein the non-paired elements indicated that the elements are added or removed from said each client version (114A).

14. The server (102) according to any of the preceding claims 10 to 13, wherein in generating the updated version of the graphical program (1800), the version management module (108) is capable of:
determining whether one or more elements are added to at least one of the client versions (114A-N);
if the one or more elements are added, adding the one or more elements to the updated version of the graphical program (1800);
if the one or more elements are not added, determining whether one or more elements are modified in the client versions (114A-N);
if the one or more elements are modified in the client versions (114A-N), determining a conflict between the modified elements;
if none of the elements are modified in the client versions (114A-N), determining whether one or more elements are modified in one of the client versions (114A-N);
if the one or more elements are modified in said one of the client versions (114A-N), adding the one or more modified elements to the updated version of the graphical program (1800);
if none of the elements are modified in said one of the client versions (114A-N), determining whether one or more elements are removed from the client versions (114A-N) compared to the server version (110);
if the one or more elements are removed from the client versions (114A-N), removing the one or more elements from the updated version of the graphical program (1800);
if none of the elements are removed from the client versions (114A-N), determining whether one or more elements are removed from one of the client versions (114A-N);
if the one or more elements are removed from one of the client versions (114A-N), retaining the one or more removed elements in the updated version of the graphical program (1800);
if none of the elements are removed from one of the client versions (114A-N), determining whether one or more elements are removed from one of the client versions (114A-N) and are modified in said one of the client versions (114A-N); and
if the one or more elements are removed from one of the client versions (114A-N) and are modified in remaining client versions (114A-N), removing the one or more elements from the updated version of the graphical program (1800).

15. The server (102) according to one of the preceding claims 12 to 14, wherein in computing the element pair score associated with said each element in the said each client version (114A), the version management module (108) is capable of:
determining whether the instruction in the element in the client version (114A) matches with the instruction of the corresponding element in the server version (110);
if there is a match, incrementing the element pair score of the element by a pre-defined value;
if there is no match, determining whether the operand in the element in the client version (114A) matches with the operand of the corresponding element in the server version (110);
if there is a match, incrementing the element pair score of the element by the pre-defined value;
if there is no match, determining whether the instruction in the predecessor element in the client version (114A) matches with the instruction of the corresponding predecessor element in the server version (110);
if there is a match, incrementing the element pair score of the element by the pre-defined value;
if there is no match, determining whether the operand in the predecessor element in the client version (114A) matches with the operand of the corresponding predecessor element in the server version (110); and
if there is a match, incrementing the element pair score of the element by the pre-defined value;
if there is no match, determining whether the instruction in the successor element in the client version (114A) matches with the instruction of the corresponding successor element in the server version (110);
if there is a match, incrementing the element pair score of the element by the pre-defined value;
if there is no match, determining whether the operand in the successor element in the client version (114A) matches with the operand of the corresponding successor element in the server version (110); and
if there is a match, incrementing the element pair score of the element by the pre-defined value.
